# EUROPÄISCHE PATENTSCHRIFT

(11) **EP 3 411 613 B1**
(45) Veröffentlichungstag und Bekanntmachung des Hinweises auf die Patenterteilung: **29.01.2020**
(21) Anmeldenummer: 17702551.7
(22) Anmeldetag: 20.01.2017
(51) Int. Cl.: F16K 31/126, B21B 1/00, F16K 31/04, B21B 45/02, F16K 31/06

(54) **STELLVENTIL, INSBESONDERE FÜR DIE VERWENDUNG IN KÜHLSTRECKEN**
CONTROL VALVE, IN PARTICULARL FOR USE IN COOLING PATHS
VANNE DE RÉGULATION, S'UTILISANT EN PARTICULIER DANS DES PARCOURS DE RÉFRIGÉRATION

(30) Priorität: 01.02.2016 DE 102016101722
(43) Veröffentlichungstag der Anmeldung: 12.12.2018
(73) Patentinhaber: GEVA automation GmbH, 52078 Aachen (DE)
(72) Erfinder: KAAS, Burkhard, 52070 Aachen (DE)
(74) Vertreter: Kohlmann, Kai
(86) Internationale Anmeldenummer: PCT/EP2017/051232
(87) Internationale Veröffentlichungsnummer: WO 2017/133908

(56) Entgegenhaltungen:
- WO-A1-2009/048995
- WO-A2-2008/092124
- DE-B1- 2 442 587
- GB-A- 2 455 569
- GB-A- 2 460 336
- US-A1- 2008 191 825

## Beschreibung

Die Erfindung betrifft ein Stellventil zum Einstellen des Durchflussquerschnittes in einer Rohrleitung, insbesondere für die hochdynamische Regelung der Kühlwassermenge von Kühlstrecken in Walzwerken.

Ein Stellventil ist eine mit Hilfsenergie arbeitende Vorrichtung, die den Durchfluss in einem Prozesssystem regelt.

In Walzwerken für Draht- und Stabstahl werden Wasser-Kühlstrecken verwendet, um die mechanischen Eigenschaften des Materials zu beeinflussen. Hierbei kommen verschiedene Verfahren zum Einsatz:
Das Tempcore Verfahren kommt im Wesentlichen bei der Herstellung von Baustahl zum Einsatz. Hier wird das fertig gewalzte Produkt vor dem Kühlbett (Stabstahl) bzw. dem Windungsleger (Draht) aus der Walzhitze heraus wärmebehandelt. Das Walzgut verlässt das letzte Walzgerüst mit einer Temperatur von 950-1050°C. In einer Kühlstrecke wird die äußere Schicht durch Wasser unter hohem Druck (5∼16bar) auf Temperaturen < 400°C abgekühlt. Hierdurch entsteht ein martensitisches Gefüge. Während des nachfolgenden Temperaturausgleichs wird einerseits die martensitische äußere Schicht wieder erwärmt (angelassen) und andererseits der Kern abgekühlt, wodurch ein ferritischperlitisches Gefüge entsteht. Durch Einsatz des Tempcore Verfahrens können die geforderten mechanischen Eigenschaften des Endproduktes bei gleichzeitiger signifikanter Reduzierung des Zuschlages von Legierungselementen erreicht werden. Die exakte Temperaturführung bestimmt das Einsparungspotential von Legierungselementen.

Beim thermomechanischen Walzen wird das Walzgut vor den letzten Umformungsschritten auf eine definierte Temperatur abgekühlt. Dies führt zu einem feinkörnigen Gefüge, das bei hoher Festigkeit gleichzeitig gute Zähigkeit
und Kaltumformbarkeit bietet. Verschiedene Ausprägungen kommen zum Einsatz: Durch thermomechanisches Walzen werden mechanische Eigenschaften erreicht, die sonst nur durch den Zuschlag von Legierungselementen erreicht
werden können. Eine exakte Temperaturführung ist Voraussetzung für die Anwendung thermomechanischer Walzverfahren.

Die Erwärmung der Stranggussknüppel in dem Wiedererwärmungsofen vor dem Warmwalzwerk ist niemals vollkommen gleichmäßig über die Länge der
Knüppel. Der Wiedererwärmungsofen unmittelbar hinter der Strangießanlage dient der Aufwärmung der abgekühlten Stranggussknüppel. Zur Halterung der Stranggussknüppel in dem Wiedererwärmungsofen sind wassergekühlte Schienen erforderlich, auf denen die Knüppel während des Erwärmes aufliegen. Im Bereich der Schienen kommt es zu Verschattungen, die sich durch ein Temperaturprofil über die Länge der Knüppel äußern. Um Abweichungen der Temperatur über die Länge der Knüppel zu vermeiden, ist eine hochdynamische Regelung des Kühlwassers erforderlich.

Die auf dem Markt befindlichen Stellglieder für eine Regelung des Kühlwassers lassen sich in pneumatische und elektrische Stellglieder einteilen:
Stellglieder mit pneumatischem Antrieb sprechen in einer kurzen bis mittleren Reaktionszeit an. Das Problem ist jedoch, dass der Übergang von der Haft- zur Gleitreibung zu einem Stick-Slip-Effekt führt, der zu einem nicht reproduzierbaren Ansprechverhalten und damit nicht gleichbleibenden Reaktionszeiten führt. Pneumatische Antriebe sind deswegen für hochgenaue, dynamische Regelungsprozesse ungeeignet.

Stellglieder mit elektrischem Antrieb basieren auf einer selbsthemmenden Motor-Getriebeeinheit mit kurzen Reaktionszeiten, einer hohen Stellgenauigkeit, jedoch zu geringen Stellgeschwindigkeiten.

Der zurzeit schnellste Ventilantrieb auf dem Markt mit einer Stellgeschwindigkeit von max. 10 mm/s erreicht zwar die geforderte Reaktionszeit, kann jedoch die geforderte Stellgeschwindigkeit (50 mm/s) nicht erreichen.

Eine exakte Temperaturführung mit minimalen Abweichungen der Temperatur nach der Kühlstrecke von der Zieltemperatur ist daher derzeit noch nicht möglich. Eine derartige Temperaturführung lässt sich jedoch erfindungsgemäß durch eine hochdynamische Regelung der Kühlwassermenge in Verbindung mit einem geeigneten Stellglied für die Regelung des Kühlwassers realisieren.

Die GB 2 460 336 A offenbart ein Unterwasser-Bohrlochkopf-Abschlusselement, das mehrere Absperrventile zur Steuerung der Strömung von Flüssigkeiten in und aus einem Bohrloch aufweist. Zum Hin- und Herbewegen des Verschlusselementes des Absperrventils aus der Öffnungs- in eine Schließstellung ist das Verschlusselement über einen Ventilschaft mit einem Linearmotor verbunden.

Die WO 2009/048995 A1 offenbart ein Absperr-Zwei-Wegeventil umfassend ein Ventilgehäuse, ein in dem Ventilgehäuse hin-und her bewegliches zylindrisches Verschlusselement, das über einen Stab mit einem Linearaktuator verbunden ist. Der mit dem Verschlusselement verbundene Linearaktuator umfasst mehrere ringförmige Statorscheiben, mehrere ringförmige Statorspulen, die zwischen den Statorscheiben angeordnet sind, mehrere Zähne, die eine zylindrische Öffnung bilden, einen in der zylindrischen Öffnung beweglich angeordneten Schieber mit mehreren Zähnen, deren Oberflächen einen zylindrischen äußeren Mantel des Schiebers bilden, wobei der Schieber durch den magnetischen Fluss der Statorspulen bewegt wird, der durch einen Stromfluss in den Spulen hervorgerufen wird. Das Funktionsprinzip des Linearaktuators beruht auf einer Reduzierung des magnetischen Widerstandes zwischen den inneren Zähnen der zylindrischen Öffnung einerseits und den äußeren Zähnen und des Schiebers andererseits.

Die US 2008/191825 A1 offenbart einen Linearaktuator zum Betätigen eines Motorventils. Der Linearaktuator umfasst einen oberen stationären Permanentmagneten und einen mit dem oberen Permanentmagneten in axialer Richtung fluchtenden unteren Magneten, wobei der obere und untere Permanentmagnet unterschiedliche Magnetisierungen aufweisen, eine obere Spule die innerhalb des oberen Magneten angeordnet ist und eine untere Spule, die innerhalb des unteren Magneten angeordnet ist sowie ein verschieblich angeordnetes Teil aus ferromagnetischem Material, wobei sich das verschiebliche Teil aufgrund der Kräfte bewegt, die durch einen Stromfluss in den stationären Spulen hervorgerufen werden.

Die DE 24 42 587 B1 offenbart ein Stellventil zum Einstellen des Durchflussquerschnittes in mindestens einer Rohrleitung umfassend einen zylindrischen Drosselkörper, einen Ventilsitz sowie einen Membran-Stellmotor zur Veränderung der Position des zylindrischen Drosselkörpers. Der Membranstellmotor weist eine Betätigungsstange auf, die in einem koaxialen hohlen zylindrischen Befestigungsansatz geführt ist, der an dem Gehäuse des Membranstellmotors zapfenartig vorsteht. Das Gehäuse des Membranstellmotors ist gegen das Ventilgehäuse mittels eines zweiteiligen starren Ständers abgestützt. Der starre Ständer besteht aus zwei lösbar miteinander verbundenen Teilen. Innerhalb des starren Ständers ist die Betätigungsstange des Membranstellmotors mit der Ventilspindel durch eine lösbare formschlüssige Kupplung gekuppelt, sodass die auf die Betätigungsstange des Membranstellmotors ausgeübte Stellkraft auf die Ventilstange übertragen wird. Der zweiteilige starre Ständer sowie die Kupplung dienen dem Zweck, eine einfache und betriebssichere Montage und Demontage des Membranstellmotors zu ermöglichen.

Die US 6,329,728 B1 offenbart einen Synchron-Linearmotor mit einer ortsfest an der Innenwand eines rohrförmigen Gehäuses angeordneten Spuleneinheit sowie ein stabförmiges Betätigungsorgan mit einer Permanent-Magneteinheit. Innerhalb des Gehäuses des Synchron-Linearmotors ist ein Sensor angeordnet, um die relative Lage zwischen dem beweglichen Element und dem Stator in axialer Richtung festzustellen.

Ausgehend von der DE 24 42 587 B1 als nächstliegenden Stand der Technik liegt der Erfindung die Aufgabe zugrunde, ein Stellventil zum Einstellen des Durchflussquerschnitts in einer Rohrleitung, insbesondere für die hochdynamische Regelung der Kühlwassermenge von Kühlstrecken in Walzwerken, vorzuschlagen, welches ein reproduzierbares Ansprechverhalten, kurze Reaktionszeiten und eine hohe Stellgenauigkeit aufweist.

Diese Aufgabe wird bei einem Stellventil der eingangs erwähnten Art durch die Merkmale des Anspruchs 1 gelöst.

Die Erfindung bezieht sich insbesondere auf ein Stellventil umfassend
- einen Ventilkörper (Ventilgehäuse),
- mindestens einen geführten Drosselkörper,
- mindesten einen Ventilsitz, wobei jeder Drosselkörper mit mindestens einem Ventilsitz zusammenwirkt sowie
- einen Stellantrieb, eingerichtet zur Veränderung der Position jedes Drosselkörpers in dem Ventilkörper.

Das Stellventil kann als Einsitz-Stellventil oder als Mehfachsitz-Stellventil, insbesondere Doppelsitz-Stellventil ausgestaltet sein. Durch den Einsatz von Mehrfachsitz-Stellventilen lassen sich die Stellkräfte reduzieren.

Außerdem kann das Stellventil als Mehrwege-Stellventil ausgeführt sind, um Stoffströme zu mischen oder zu teilen.

Die geometrische Form jedes Drosselkörpers bestimmt die Durchflusskennlinie. Mit dem veränderbaren Durchfluss kann man den Druck, die Temperatur oder auch den Durchfluss des Mediums selbst regeln.

Als Materialien für Stellventile kommen beispielsweise Grauguss, Messing, Stahlguss, Edelstahl oder Kunststoff zum Einsatz.

Das Stellventil kann in die Rohrleitung bzw. das Rohrleitungsnetz auf verschiede Art- und Weise eingebaut werden. In Betracht kommen beispielsweise ein Einschweißen, Einklemmen oder vorzugsweise ein Verbinden über Flansche.

Der Linearmotor verschiebt den oder die Drosselkörper des Stellventils in einer geführten Translationsbewegung. Der Linearmotor als Direktantrieb ermöglicht es, unmittelbar eine translatorische Bewegung mit verschiedenen Kräften und/oder Geschwindigkeiten zu erzeugen. Der Linearmotor verfügt über eine kurze Reaktionszeit bei hoher Stellgeschwindigkeit und hoher Stellgenauigkeit, wobei zudem die Reaktionszeit reproduzierbar ist. Ein Stellventil mit einem derartigen Stellantrieb ist für die hochdynamische Regelung der Kühlwassermenge von Kühlstrecken in Walzwerken bestens geeignet.

Der Linearmotor umfasst einen stromdurchflossenen Primärteil sowie einen Reaktions- bzw. Sekundärteil; er ist als Synchron-Linearmotor ausgebildet.

Die Permanentmagnete des Synchron-Linearmotors wirken mit einem ortsfesten Primärteil zusammen. Insbesondere sind keine bewegten Leitungen für die Energieversorgung des Synchron-Linearmotors erforderlich.

Erfindungsgemäß ist die Permanent-Magneteinheit unmittelbar an einem Betätigungsorgan für jeden Drosselkörper angeordnet. Hierdurch lässt sich die Stellgenauigkeit des Stellantriebs weiter erhöhen, da keine spielbehafteten Übertragungsglieder zwischen dem Stellantrieb und dem unmittelbar mit dem Betätigungsorgan verbundenen Drosselkörper vorgesehen sind.

Die Permanent-Magneteinheit ist als integraler Bestandteil des stabförmigen Betätigungsorgans ausgebildet. Das stabförmige Betätigungsorgan führt als Bestandteil des Linearantriebs eine Translationsbewegung aus, um den Drosselkörper hin- und her zu bewegen.

Um trotz Druck- und Volumenschwankungen des von dem Stellventil gesteuerten Kühlmediums das Stellventil exakt einstellen zu können, ist eine Lageregelung für den Linearmotor vorgesehen. Die Lageregelung trägt trotz der geringen trägen Masse des Linearmotors zu der gewünschten hohen Stellgenauigkeit auch bei Druck- und Volumenschwankungen des gesteuerten Kühlmediums bei.

Ein erfindungsgemäßer Stellantrieb weist beispielsweise folgende technische Daten auf:
- **Stellkraft:**
   Kleine Version (DN100, 10bar Wasserdruck): 3kN
   Große Version (DN300, 15bar Wasserdruck): 40kN
- **Hub:**
   20∼150mm
- **Stellgeschwindigkeit:**
   minimal 50 mm/s, vorzugsweise 150 mm/s
- **Stellgenauigkeit:**
   0.05 mm
- **Reaktionszeit:**
   t ≤ 0.1 sec

In einer vorteilhaften Ausgestaltung der Erfindung umfasst der Stellantrieb zusätzlich einen Membranantrieb mit einer Membran, die zumindest auf einer ersten Seite der Membran mit einem Druckmedium beaufschlagbar ist. Der Linearmotor übernimmt die sehr hohe Spitzenkraft zum Öffnen des Stellventils, die anschließend zumindest teilweise von dem Membranantrieb übernommen wird. Sofern die erste Seite des Membranantriebs durch ein Druckmedium und die zweite Seite der Membran durch mindestens eine Feder beaufschlagt wird, kann für den Fall eines Stromausfalls des Linearmotors ein automatisches Schließen beziehungsweise Öffnen des Stellventils bewirkt werden. Alternativ kann der pneumatische Antrieb mit einer beidseitig individuell mit Druckmedium beaufschlagbaren Membran ausgeführt sein.

Konstruktiv vorteilhaft wird der zusätzliche Membranantrieb in den Stellantrieb dadurch integriert, dass die Membran am oberen Ende des stabförmigen Betätigungsorgans befestigt ist.

Nachfolgend wird ein erfindungsgemäßes Stellventil anhand der Figuren näher erläuterte. Es zeigen:
- **Figur 1**: ein erfindungsgemäßes Stellventil mit Linearmotor,
- **Figuren 2 A - D**: verschieden Ventilgehäuse für ein Stellventil mit Linearmotor sowie
- **Figuren 3 A - F**: unterschiedliche Ausführungsformen von Drosselkörpern für ein Stellventil mit Linearmotor.

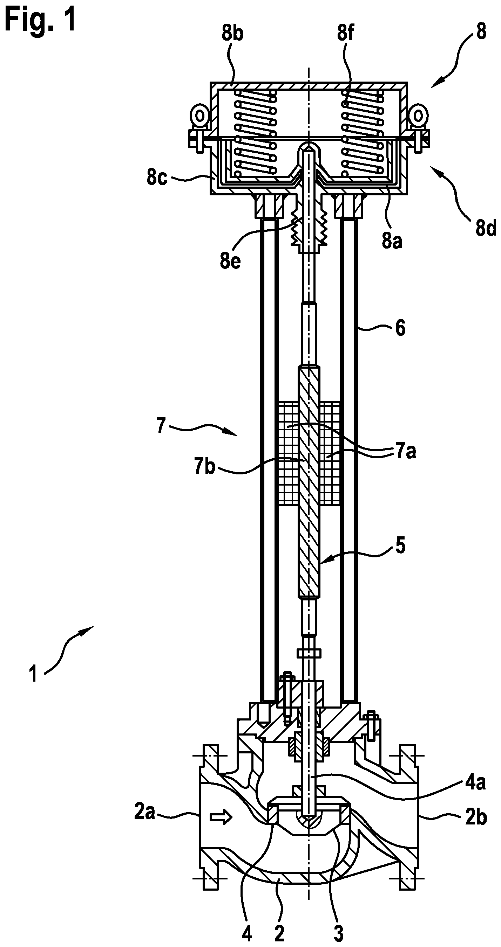

Das Stellventil (1) umfasst ein Ventilgehäuse (2) mit einem Ein- und Auslass (2a, 2b), einen Drosselkörper (3) sowie einen Ventilsitz (4). Der mit dem Drosselkörper (3) verbundene Ventilschaft (4a) ist außerhalb des Ventilgehäuses (2) mit einem stabförmigen Betätigungsorgan (5) gekoppelt. Das Betätigungsorgan (5) ist in einem Antriebsgehäuse (6) translatorisch in vertikaler Richtung hin- und her bewegbar geführt, um den mit dem Betätigungsorgan (5) gekoppelten Drosselkörper (3) zwischen einer in Figur 1 dargestellten, geschlossenen Position und einer geöffneten Position hin- und her zu bewegen.

Der sich nach unten verjüngende Drosselkörper (3) ist derart ausgebildet, dass er in der geschlossenen Position den Durchfluss zwischen dem Drosselkörper (3) und dem Ventilsitz (4) unterbindet. Durch Anheben des sich nach unter verjüngenden Drosselkörperes (3) ergibt sich zwischen dem Ventilsitz (4) und dem Drosselkörper (3) ein ringförmiger Durchflussquerschnitt, der sich aufgrund der Querschnittsform des Drosselkörperes während der Bewegung in die vollständig geöffnete Position vergrößert.

Der Stellantrieb (7,8) umfasst einen Linearmotor (7) und einen Membranantrieb (8). Der Linearmotor (7) wird von einer ortsfest in dem Antriebsgehäuse (6) angeordneten Spuleneinheit (7a) und einer Permanent-Magneteinheit (7b) gebildet. Die Permanent-Magneteinheit (7b) ist als integraler Bestandteil, nämlich als Teilstück des stabförmigen Betätigungsorgans (5) ausgebildet.

Der auf das Antriebsgehäuse (6) aufgesetzte und dort befestigte Membranantrieb (8) umfasst eine Membran (8a), die zwischen den Gehäusehälften (8b, 8c) des Membrangehäuses (8d) eingeklemmt ist. Über eine gasdichte Durchführung (8e) ist das obere Ende des stabförmigen Betätigungsorgans (5) in das Membrangehäuse geführt und an der Membran (8a) mittig befestigt. Von der Unterseite ist die Membran (8a) mit einem Druckmedium beaufschlagbar. Die Oberseite der Membran wird durch Federn (8f) belastet, die sich an der oberen Gehäusehälfte (8b) abstützen.

Die Federn (8f) bewirken, dass bei einem Druckabfall in der unteren Kammer des Membranantriebs (8) die Membran (8a) in Schließrichtung des Stellventils (1) belastet wird.

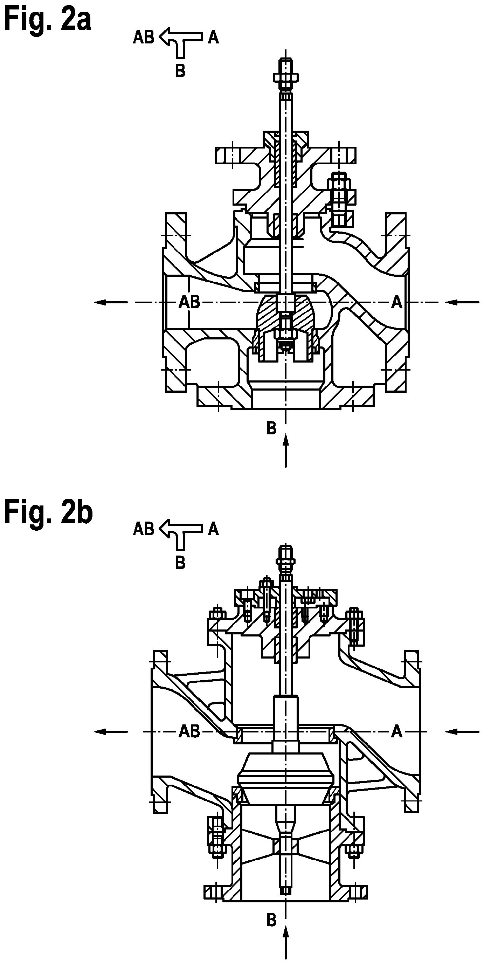

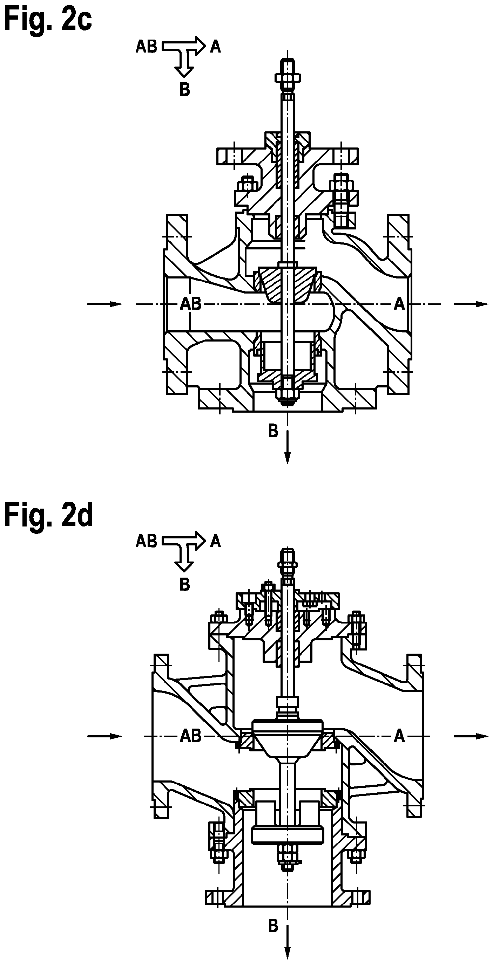

Figuren 2a bis 2d zeigen unterschiedliche Ausführungsformen von Ventilgehäusen, die für Dreiwege-Stellventile bestimmt sind. Die Ausführungsformen nach Figuren 2a und 2b weisen jeweils einen Drosselkörper auf, der mit zwei Ventilsitzen zusammenwirkt. Die Ausführungsformen nach Figuren 2c und 2d weisen zwei Drosselkörper auf, die jeweils mit einem Ventilsitz zusammenwirken.

Hinzuweisen ist darauf, dass verschiedene Ausführungsformen von Stellventilen in der geschlossenen Position den Durchfluss lediglich deutlich reduzieren, nicht jedoch unterbinden. Man spricht hier von einer Leckagemenge, die durchaus im Bereich von 10% des Nenndurchflusses liegen kann.

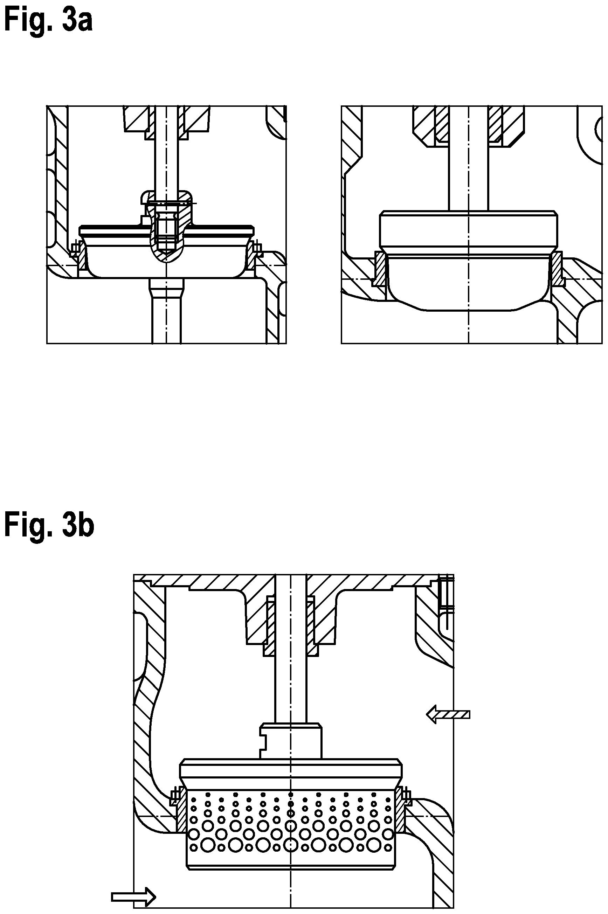

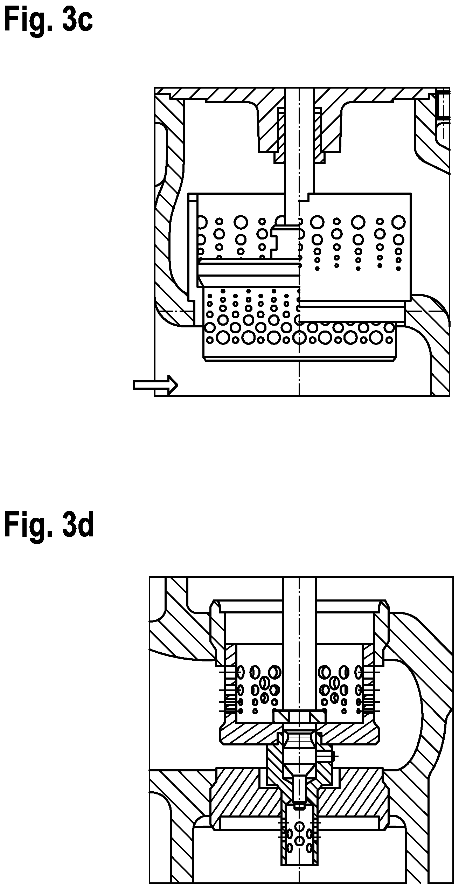

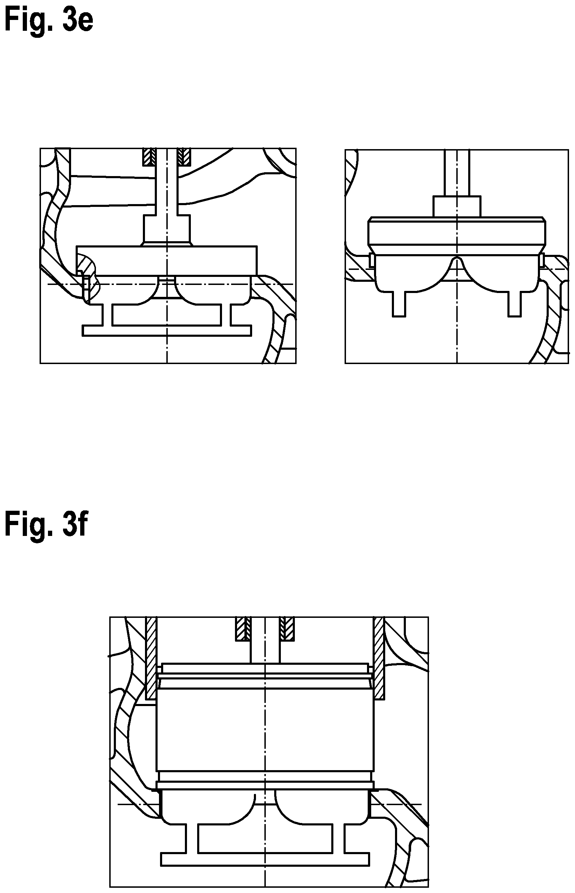

Figur 3 zeigt unterschiedliche Ausführungsformen der Drosselkörper, die Einfluss auf die Durchflusskennlinie aufweisen. Figur 3a zeigt einen als Parabolkegel, Figur 3b einen als Lochkegel, Figur 3c einen als Lochkegel mit Lochkorb, Figur 3d einen als Lochkegel für ein Stellventil in Dreiwegebauform, Figur 3e einen als Laternenkegel und Figur 3f einen als Laternenkegel mit Druckentlastung ausgestalteten Drosselkörper.

| **Nr.** | **Bezeichnung** |
|---|---|
| 1. | Stellventil |
| 2. | Ventilgehäuse |
| 2a. | Einlass |
| 2b. | Auslass |
| 3. | Drosselkörper |
| 4. | Ventilsitz |
| 4a. | Ventilschaft |
| 5. | Betätigungsorgan |
| 6. | Antriebsgehäuse |
| 7. | Stellantrieb |
| 7a. | Spuleneinheit |
| 7b. | Permanent-Magneteinheit |
| 8. | Membranantrieb |
| 8a. | Membran |
| 8b, c. | Gehäusehälften |
| 8d. | Membrangehäuse |
| 8e. | Durchführung |
| 8f. | Federn |

## Patentansprüche

1. Stellventil (1) zum Einstellen des Durchflussquerschnitts in mindestens einer Rohrleitung, insbesondere für die hochdynamische Regelung der Kühlmittelmenge von Kühlstrecken in Walzwerken, umfassend mindestens einen Drosselkörper (3), wobei die geometrische Form jedes Drosselkörpers (3) die Durchflusskennlinie des Stellventils (1) bestimmt, mindestens einen Ventilsitz (4) sowie einen Stellantrieb (7), eingerichtet zur Veränderung der Position jedes Drosselkörpers (3), **dadurch gekennzeichnet, dass**
- der Stellantrieb einen elektrischen Linearmotor (7) umfasst, der als Synchron-Linearmotor ausgebildet ist,
- der Linearmotor eine Spuleneinheit (7a) und eine Permanent-Magneteinheit (7b) aufweist,
- die Spuleneinheit (7a) ortsfest angeordnet ist,
- die Permanent-Magneteinheit (7b) an einem stabförmigen Betätigungsorgan (5) für den Drosselkörper (3) angeordnet und als integraler Bestandteil des Betätigungsorgans ausgebildet ist, wobei der Drosselkörper unmittelbar mit dem Betätigungsorgan verbunden ist,
und
- der Linearmotor (7) eine Lageregelung aufweist.

2. Stellventil nach Anspruch 1, **dadurch gekennzeichnet, dass** das stabförmige Betätigungsorgan (5) eine Translationsbewegung ausführt.

3. Stellventil nach Anspruch 1 oder 2, **dadurch gekennzeichnet, dass** der Stellantrieb zusätzlich einen Membranantrieb (8) mit einer Membran (a) umfasst, die zumindest auf einer ersten Seite der Membran mit einem Druckmedium beaufschlagbar ist.

4. Stellventil nach Anspruch 3, **dadurch gekennzeichnet, dass** die Membran (8a) am oberen Ende des stabförmigen Betätigungsorgans (5) befestigt ist.

5. Stellventil nach Anspruch 3 oder 4, **dadurch gekennzeichnet, dass** eine zweite Seite der Membran federbelastet ist.

6. Kühlstrecke für ein Walzwerk umfassend mindestens eine Rohrleitung zur Führung eines flüssigen Kühlmittels, **dadurch gekennzeichnet, dass** in der mindestens einen Rohrleitung mindestens ein Stellventil (1) nach einem der Ansprüche 1 bis 5 angeordnet ist.

## Claims

1. A control valve (1) for adjusting the flow cross-section in at least one pipeline, in particular for the highly dynamic controlling of the amount of cooling media of cooling sections in rolling mills, comprising at least one throttle body (3), wherein the geometric shape of each throttle body (3) determines the flow characteristic of the control valve (1), at least one valve seat (4) as well as an actuator (7) adapted to modify the position of each throttle body (3), **characterized in that**
- the actuator comprises a linear electric motor (7) which is configured as a synchronous linear motor,
- the linear motor comprises a coil unit (7a) and a permanent magnet unit (7b),
- the coil unit (7a) is arranged in a fixed position,
- the permanent magnet unit (7b) is disposed on a rod-shaped actuating element (5) for the throttle body (3) and is configured as an integral part of the actuating element, wherein the throttle body is directly connected to the actuating element, and
- the linear motor (7) has a position regulator.

2. The control valve according to claim 1, **characterized in that** the rod-shaped actuating element (5) executes a translational movement.

3. The control valve according to claim 1 or 2, **characterized in that** the actuator additionally comprises a membrane drive (8) with a membrane (a) which can be acted upon with a pressure medium at least on a first side of the membrane.

4. The control valve according to claim 3, **characterized in that** the membrane (8a) is fastened at the upper end of the rod-shaped actuating element (5).

5. The control valve according to claim 3 or 4, **characterized in that** a second side of the membrane is spring-loaded.

6. A cooling section for a rolling mill comprising at least one pipeline for guiding a liquid coolant, **characterized in that** at least one control valve (1) according to one of claims 1 to 5 is disposed in the at least one pipeline.

## Revendications

1. Vanne de régulation (1), destinée à régler la section transversale de débit dans au moins une canalisation, notamment pour la régulation hautement dynamique de la quantité d'agent réfrigérant dans des lignes de refroidissement dans des laminoirs, comprenant au moins un limiteur de débit (3), la forme géométrique de chaque limiteur de débit (3) déterminant la courbe caractéristique de débit de la vanne de régulation (1), au moins un siège de vanne (4), ainsi qu'un actionneur (7), aménagé pour faire varier la position de chaque limiteur de débit (3), **caractérisée en ce que**
- l'actionneur comprend un moteur linéaire (7) électrique, qui est conçu sous la forme d'un moteur linéaire synchrone,
- le moteur linéaire comporte un ensemble de bobines (7a) et un ensemble d'aimants permanents (7b),
- l'ensemble de bobines (7a) est placé de manière stationnaire,
- l'ensemble d'aimants permanents (7b) est placé sur un organe de manœuvre (5) en forme de tige pour le limiteur de débit (3) et est conçu sous la forme de partie intégrante de l'organe de manœuvre, le limiteur de débit étant directement relié avec l'organe de manœuvre, et
- le moteur linéaire (7) comporte un contrôle de position.

2. Vanne de régulation selon la revendication 1, **caractérisée en ce que** l'organe de manœuvre (5) en forme de tige réalise un déplacement en translation.

3. Vanne de régulation selon la revendication 1 ou 2, **caractérisée en ce que** l'actionneur comprend additionnellement un entraînement à membrane (8) pourvu d'une membrane (a), qui au moins sur une première face de la membrane est susceptible d'être exposé à un milieu sous pression.

4. Vanne de régulation selon la revendication 3, **caractérisée en ce que** la membrane (8a) est fixée sur l'extrémité supérieure de l'organe de manœuvre (5) en forme de tige.

5. Vanne de régulation selon la revendication 3 ou 4, **caractérisée en ce qu'**une seconde face de la membrane est contrainte par ressort.

6. Ligne de refroidissement pour un laminoir, comprenant au moins une canalisation, destinée à conduire un agent réfrigérant liquide, **caractérisée en ce que** dans l'au moins une canalisation est placée au moins une vanne de régulation (1) selon l'une quelconque des revendications 1 à 5.
